# EUROPÄISCHE PATENTSCHRIFT

(11) **EP 2 082 150 B1**
(45) Veröffentlichungstag und Bekanntmachung des Hinweises auf die Patenterteilung: **03.09.2014**
(21) Anmeldenummer: 07821173.7
(22) Anmeldetag: 11.10.2007
(51) Int. Cl.: F16H 61/02, B60W 30/14, F16H 63/50, B60W 10/06, B60W 10/10

(54) **VERFAHREN ZUM STEUERN UND/ODER REGELN EINES AUTOMATGETRIEBES**
METHOD FOR CONTROLLING AND/OR REGULATING AN AUTOMATIC GEARBOX
PROCÉDÉ DE COMMANDE ET/OU DE RÉGULATION D'UNE TRANSMISSION AUTOMATIQUE

(30) Priorität: 24.10.2006 DE 102006049995
(43) Veröffentlichungstag der Anmeldung: 29.07.2009
(73) Patentinhaber: ZF Friedrichshafen AG, 88038 Friedrichshafen (DE)
(72) Erfinder: WOLFGANG, Werner, 88213 Ravensburg (DE); WÜRTHNER, Maik, 88048 Friedrichshafen (DE); SAUTER, Ingo, Aberdeen, North Carolina 28315 (US)
(86) Internationale Anmeldenummer: PCT/EP2007/060806
(87) Internationale Veröffentlichungsnummer: WO 2008/049734

(56) Entgegenhaltungen:
- EP-A- 1 033 276
- EP-A- 1 557 590
- DE-A1- 19 748 424
- DE-A1-102004 030 198
- US-A- 4 913 006

## Beschreibung

Die vorliegende Erfindung betrifft ein Verfahren zum Steuern und/oder Regeln eines Automatgetriebes gemäß der im Oberbegriff des Patentanspruches 1 näher definierten Art, und bekannt aus DE 10 2004 030198 A1.

Aus der Fahrzeugtechnik sind Verfahren zum Steuern und/oder Regeln eines Automatgetriebes bekannt, bei denen mit automatischen Schaltprogrammen bei Stufengetrieben ein Schaltvorgang durchgeführt wird. Ausgehend von verschiedenen Eingangssignalen wird durch das Schaltprogramm eine Schaltdrehzahl bestimmt, die im Normalfall in einer definierten Zeit erreicht werden soll, um die Schaltung durchzuführen.

Dabei ergibt sich das grundsätzliche Problem, dass ein unerwarteter Ü-bergang der Motordrehzahl in eine Abregelung während des normalen Fahrbetriebs erfolgen kann. Die Motorabregelung kann extern z. B. durch eine von einem Fahrer vorgegebene Sollgeschwindigkeit oder durch eine vorgegebene Maximalgeschwindigkeit erfolgen. Es ist auch möglich, dass eine interne Motorabregelung auftritt, die z. B. erfolgt, wenn eine Leistungsgrenze des Motors oder eine Enddrehzahl erreicht wird. Durch die Motorabregelung ist es nicht möglich, die von dem Schaltprogramm ermittelte Schaltdrehzahl zu erreichen, um die gewünschte Schaltung durchzuführen.

Beispielsweise aus der Druckschrift EP 1 033 276 B1 ist ein Verfahren und eine Vorrichtung zur automatisierten Beeinflussung des Fahrverhaltens eines Kraftfahrzeuges mit einer Brennkraftmaschine bekannt. Mit dem bekannten Verfahren ist es im Wesentlichen möglich, zu Beginn bzw. am Ende einer Fahrsituation entsprechende Maßnahmen für eine verbesserte wirtschaftliche und sicherheitsrelevante Fahrstrategie zu ergreifen. So ist es möglich nach einem festgestellten Beginn eines Verzögerungsvorgangs durch die Betätigung der Fußbremse weitere Bremsmaßnahmen durch die Aktivierung der Motorbremse zur Unterstützung des Bremsvorganges durchzuführen. Somit werden durch das bekannte Verfahren bestimmte Fahrzustände adaptiert. Die mit einem unerwarteten Übergang in eine Motorabreglung verbundenen Probleme während eines Schaltvorganges können auch durch das bekannte Verfahren nicht gelöst werden.

Aus der Druckschrift DE 197 48 424 C2 ist ein weiteres Verfahren zur fahrverhaltensadaptiven Steuerung eines variabel einstellbaren Kraftfahrzeugaggregates bekannt. Auch bei diesem Verfahren steht eine adaptive Steuerung im Vordergrund. Mit dem Verfahren kann ein bestimmter Fahrwunsch anhand verbesserter Kennlinienfelder realisiert werden. Auf diese Weise kann das längerfristige Fahrverhalten, d. h. die Fahrweise des jeweiligen Fahrzeugführers berücksichtigt werden.

Ausgehend von dem genannten Stand der Technik liegt der vorliegenden Erfindung die Aufgabe zugrunde, ein Verfahren der eingangs beschriebenen Gattung vorzuschlagen, bei dem ein Motoreingriff erkannt und berücksichtigt wird.

Diese Aufgabe wird erfindungsgemäß durch die Merkmale des Patentanspruches 1 gelöst. Vorteilhafte Weiterbildungen ergeben sich insbesondere aus den Unteransprüchen.

Demnach wird ein Verfahren zum Steuern und/oder Regeln eines Automatgetriebes vorgeschlagen, bei dem zumindest während des Schaltprogramms eine Konstantfahrterkennung an dem Fahrzeug durchgeführt wird.

Auf diese Weise kann ein unerwarteter Motordrehzahleingriff beispielsweise durch eine Motorabregelung während des normalen Fahrbetriebs erkannt und bei dem Schaltprogramm berücksichtigt werden. Dies ermöglicht eine entsprechende Reaktion auf den Motoreingriff, so dass der Schaltvorgang auf diese Situation angepasst werden kann.

Im Rahmen einer vorteilhaften Ausführungsform der vorliegenden Erfindung kann eine Konstantfahrt beispielsweise durch eine Beschleunigungsbetrachtung erkannt werden. Folglich wird bei der Konstantfahrterkennung als Parameter die Fahrzeugbeschleunigung verwendet.

Um eine optimale Bewertungsgrundlage zum Erkennen einer Konstantfahrt in Abhängigkeit der Fahrzeugbeschleunigung zu erhalten, kann gemäß einer nächsten Weiterbildung der Erfindung vorgesehen sein, dass die Fahrzeugbeschleunigung über einen vorbestimmten Zeitraum ermittelt wird. Der Zeitraum kann je nach Anwendungsbereich gewählt werden. Die Abtastung der Einzelwerte der Fahrzeugbeschleunigung ist variabel applizierbar. Bei der Beschleunigungsbetrachtung werden vorzugsweise die ermittelten Werte in einem Speicher, insbesondere in einem Ringspeicher oder dergleichen, hinterlegt, um eine Auswertung der in dem betrachteten Zeitraum ermittelten Werte durchzuführen. Bei der Auswertung werden bei dem erfindungsgemäßen Verfahren die ermittelten Beschleunigungswerte mit einem Schwellenwert verglichen. Der Schwellenwert ist parametrierbar. Wenn bei der Auswertung erkannt wird, dass die ermittelten Beschleunigungswerte unterhalb des vorbestimmten Schwellenwertes liegen, wird eine Konstantfahrt bei dem Fahrzeug gesetzt.

Bei der Konstantfahrterkennung gemäß dem vorgeschlagenen Verfahren kann im Rahmen einer nächsten Ausgestaltung vorgesehen sein, dass nach dem Setzen der Konstantfahrt beispielsweise die Fahrgeschwindigkeit oder auch eine andere Betriebsgröße des Fahrzeuges ermittelt und vorzugsweise gespeichert wird. Anhand der ermittelten und gespeicherten Werte der Fahrgeschwindigkeit kann auf einfachste Weise eine Auswertung durchgeführt werden, wann evtl. ein Rücksetzen der Konstantfahrt erfolgen soll. Beispielsweise können jeweils die Änderungen der Fahrgeschwindigkeit ermittelt werden, um diese dann anhand eines applizierbaren Schwellenwertes auszuwerten. Im Falle einer Änderung der Fahrgeschwindigkeit, die über diesem Schwellenwert liegt, kann die Konstantfahrt zurückgesetzt werden. Durch diese Hysterese wird ein so genanntes Signaltoggeln verhindert.

Eine andere vorteilhafte Ausführungsvariante der vorliegenden Erfindung kann vorsehen, dass die Konstantfahrterkennung anhand eines jeweils vorliegenden Motormodus durchgeführt wird. Bei dieser Art der Konstantfahrterkennung wird in vorteilhafter Weise eine bereits bekannte Information verwendet, um eine Konstantfahrt zu erkennen und in dem Schaltprogramm zu setzen.

Vorzugsweise kann die Information über den aktuellen Modus des Motors über eine Kommunikationsverbindung mit dem Motorsteuergerät erhalten werden. Es sind auch andere Kommunikationswege verwendbar. Es hat sich jedoch als besonders vorteilhaft erwiesen, die Informationen über das Steuergerät abzurufen, da die Information über den jeweils aktuellen Modus in dem Motorsteuergerät hinterlegt ist.

Wenn beispielsweise eine externe Abregelung als Modus des Motors vorliegt und diese Modusinformation durch ein entsprechendes Signal übermittelt wird, kann eine Konstantfahrt bei dem Schaltprogramm gesetzt werden. Die externe Abregelung des Motors liegt vor, wenn ein Fahrgeschwindigkeitsbegrenzer oder ein Höchstgeschwindigkeitsbegrenzer aktiv ist. Es sind auch andere Betriebszustände denkbar, die eine Abregelung der Fahrgeschwindigkeit vorsehen.

Eine Weiterbildung der Erfindung kann vorsehen, dass die Konstantfahrt bei nicht aktivem Fahrgeschwindigkeitsbegrenzer, bei nicht aktivem Höchstgeschwindigkeitsbegrenzer und bei nicht aktivem Schaltprogramm zurückgesetzt wird. Das Schaltprogramm muss hier berücksichtigt werden, da sich bei einer Schaltung der Modus ändert, obwohl eine extern verursachte Abregelung der Fahrgeschwindigkeit aktiv sein kann.

Bei dem erfindungsgemäßen Verfahren können beliebige Kombinationsmöglichkeiten der Ausführungsvarianten des erfindungsgemäßen Verfahrens verwendet werden. Beispielsweise kann bei dem Verfahren vorgesehen sein, dass ausschließlich die Beschleunigungsbetrachtung oder ausschließlich die Modusbetrachtung zum Konstantfahrtsetzen oder zum Konstantfahrtrücksetzen verwendet wird. Es ist auch möglich, dass beide Verfahren parallel durchgeführt werden und eines der beiden Verfahren ausreicht, um die Konstantfahrt zu setzen oder zurückzusetzen.

Nachfolgend wird die vorliegende Erfindung anhand der Zeichnungen näher erläutert.
Es zeigen:
- Fig. 1: ein Ablaufdiagramm einer möglichen Ausführungsvariante eines erfindungsgemäßen Verfahrens und
- Fig. 2: ein Ablaufdiagramm einer zweiten Ausführungsvariante des erfindungsgemäßen Verfahrens.

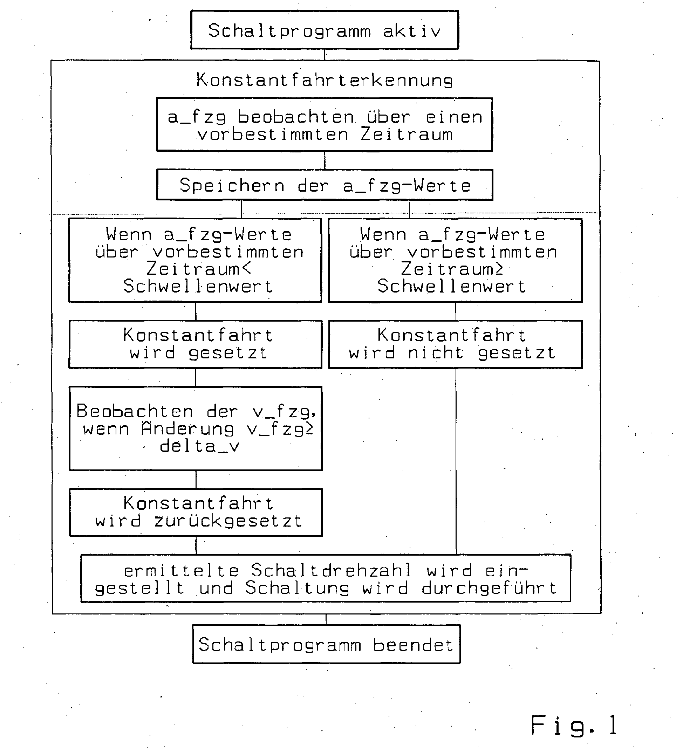

Bei der in Fig. 1 dargestellten Ausführungsvariante des erfindungsgemäßen Verfahrens wird die Konstantfahrterkennung innerhalb des Schaltprogramms über eine Betrachtung der Fahrzeugbeschleunigung a_fzg vorgenommen. Die Fahrzeugbeschleunigung a_fzg wird dazu über einen definierten, vorbestimmten Zeitraum betrachtet und sämtliche Werte der Fahrzeugbeschleunigung a_fzg werden beispielsweise in einem Ringspeicher abgespeichert.

Wenn die gespeicherten Werte der Fahrzeugbeschleunigung a_fzg unterhalb eines parametrierbaren Schwellenwertes liegen, d. h. sämtliche Ringspeicherwerte liegen innerhalb des vorgegebenen Toleranzbandes, wird eine Konstantfahrt in dem Schaltprogramm gesetzt. Wenn die gespeicherten Werte der Fahrzeugbeschleunigung a_fzg größer als der vorgegebene Schwellenwert sind bzw. nicht mehr innerhalb des Toleranzbandes liegen, wird keine Konstantfahrt gesetzt. In dem Fall wird das Schaltprogramm normal durchgeführt, so dass bei Erreichen einer durch das Schaltprogramm ermittelten Schaltdrehzahl die Schaltung durchgeführt wird und das Schaltprogramm danach z. B. abgeschlossen bzw. beendet wird.

Wenn jedoch eine Konstantfahrt gesetzt wird, kann die Fahrgeschwindigkeit v_fzg beobachtet und ggf. gespeichert werden, so dass bei einer Änderung der Fahrgeschwindigkeit v_fzg um einen applizierbaren Schwellenwert delta_v die Konstantfahrt zurückgesetzt werden kann. Nach dem Zurücksetzen der Konstantfahrt kann in üblicher Weise die ermittelte Schaltdrehzahl durch das Schaltprogramm eingestellt werden, um die Schaltung durchzuführen und das Schaltprogramm zu beenden.

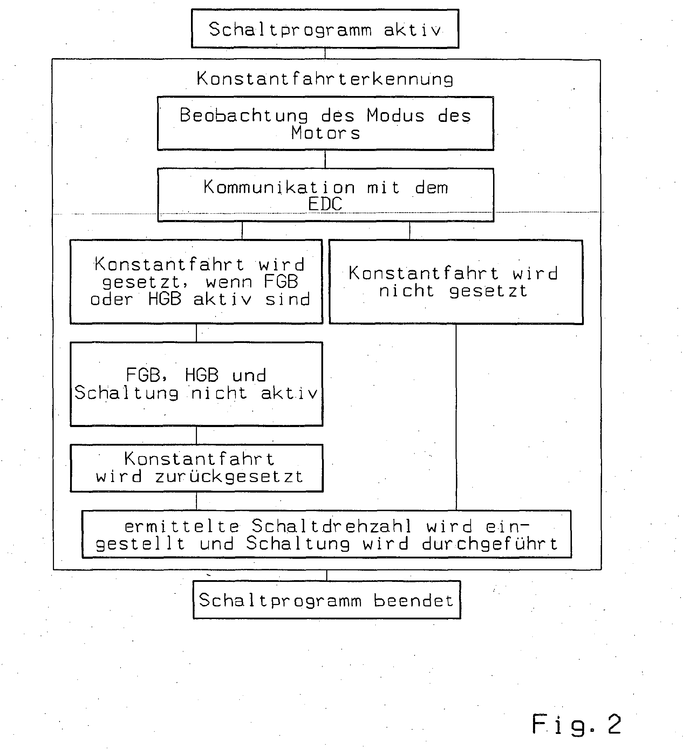

Fig. 2 zeigt eine zweite Ausführungsvariante des erfindungsgemäßen Verfahrens. Bei dieser Ausführungsvariante wird die Konstantfahrterkennung anhand der Auswertung eines Modus des Motors durchgeführt. Dazu wird bei dem aktiven Schaltprogramm über die Kommunikationsverbindung mit dem Motorsteuergerät EDC der jeweils aktuelle Modus abgerufen, in dem sich der Motor gerade befindet.

Wenn sich der Motor beispielsweise in einer externen Abregelung befindet, wird dies über das Motorsteuergerät EDC anhand eines entsprechenden Signals an das Schaltprogramm übermittelt. In diesem Fall wird eine Konstantfahrt bei dem Fahrzeug erkannt und entsprechend gesetzt. Als Setzbedingungen wird demnach bei dieser Ausführungsvariante der Erfindung die externe Motorabregelung verwendet. Die externe Motorabregelung liegt vor, wenn ein Fahrgeschwindigkeitsbegrenzer FGB oder ein Höchstgeschwindigkeitsbegrenzer HGB aktiv ist.

Das Schaltprogramm läuft normal weiter ab, wenn keine externe Motorregelung bei dem Fahrzeug durchgeführt wird. In diesem Fall wird keine Konstantfahrt gesetzt und die ermittelte Schaltdrehzahl eingestellt, um die Schaltung durchzuführen.

Wenn jedoch eine Konstantfahrt gesetzt ist, müssen die Rücksetzbedingungen geprüft werden. Sobald diese erfüllt sind, wird die Konstantfahrt zurückgesetzt, so dass dann das Schaltprogramm die ermittelte Motordrehzahl einstellen und die Schaltung durchführen kann, um das Schaltprogramm zu beenden. Die Rücksetzbedingungen der Konstantfahrt sind gegeben, wenn weder der Fahrgeschwindigkeitsbegrenzer FGB noch der Höchstgeschwindigkeitsbegrenzer HGB noch eine Schaltung aktiv ist.

### Bezugszeichen

- a_fzg: Fahrzeugbeschleunigung
- delta_v: Schwellenwert
- EDC: Motorsteuergerät
- v_fzg: Fahrgeschwindigkeit
- FGB: Fahrgeschwindigkeitsbegrenzer
- HGB: Höchstgeschwindigkeitsbegrenzer

## Patentansprüche

1. Verfahren zum Steuern und/oder Regeln eines Automatgetriebes eines Fahrzeuges, bei dem während eines Schaltprogrammes eine vorbestimmte Schaltdrehzahl eingestellt wird, bei der die Schaltung durchgeführt wird, zumindest während des Schaltprogrammes eine Konstantfahrterkennung bei dem Fahrzeug durchgeführt wird, **dadurch gekennzeichnet, dass** zum Erkennen und zum Setzen oder Zurücksetzen einer Konstantfahrt eine Fahrzeugbeschleunigung (a_fzg) sowie ein jeweils vorliegender Modus des Motors des Fahrzeuges verwendet wird, wobei zum Setzen oder Zurücksetzen einer Konstantfahrt die Beschleunigungsbetrachtung und die Modusbetrachtung parallel durchgeführt werden und eines der beiden Verfahren ausreicht, um die Konstantfahrt zu setzen oder zurückzusetzen.

2. Verfahren nach Anspruch 1, **dadurch gekennzeichnet, dass** nach einem Zurücksetzen einer Konstantfahrt eine ermittelte Schaltdrehzahl durch das Schaltprogramm eingestellt, die Schaltung durchgeführt und das Schaltprogramm beendet wird.

3. Verfahren nach Anspruch 1, **dadurch gekennzeichnet, dass** die Fahrzeugbeschleunigung (a_fzg) über einen vorbestimmten Zeitraum ermittelt wird.

4. Verfahren nach Anspruch 3, **dadurch gekennzeichnet, dass** die ermittelten Werte der Fahrzeugbeschleunigung (a_fzg) in einem Ringspeicher gespeichert werden.

5. Verfahren nach einem der Ansprüche 3 oder 4, dadurch **gekenn- zeichnet** , dass die ermittelten Werte der Fahrzeugbeschleunigung (a_fzg) mit einem Schwellenwert verglichen werden.

6. Verfahren nach Anspruch 5, **dadurch gekennzeichnet, dass** eine Konstantfahrt bei dem Fahrzeug gesetzt wird, wenn die ermittelten Werte der Fahrzeugbeschleunigung (a_fzg) unterhalb des vorbestimmten Schwellenwertes liegen.

7. Verfahren nach einem der vorangehenden Ansprüche, dadurch **ge**- **kennzeichnet**, dass nach der Konstantfahrterkennung die Fahrgeschwindigkeit (v_fzg) ermittelt und gespeichert wird.

8. Verfahren nach Anspruch 7, **dadurch gekennzeichnet, dass** die Konstantfahrt bei einer Änderung der Fahrgeschwindigkeit (v_fzg) um einen vorbestimmten Schwellenwert (Delta_v) zurückgesetzt wird.

9. Verfahren nach Anspruch 1, **dadurch gekennzeichnet, dass** der jeweils aktuelle Modus des Motors über eine Kommunikation mit dem Motorsteuergerät (EDC) ermittelt wird.

10. Verfahren nach Anspruch 1 oder 9, **dadurch gekennzeichnet , dass** eine Konstantfahrt gesetzt wird, wenn eine externe Abregelung der Fahrgeschwindigkeit (v_fzg) vorliegt.

11. Verfahren nach Anspruch 10, **dadurch gekennzeichnet, dass** die externe Abregelung der Fahrgeschwindigkeit (v_fzg) vorliegt und eine Konstantfahrt gesetzt wird, wenn ein Fahrgeschwindigkeitsbegrenzer (FGB) oder ein Höchstgeschwindigkeitsbegrenzer (HGB) aktiv ist.

12. Verfahren nach Anspruch 1, 9, 10 oder 11, **dadurch gekennzeichnet, dass** die Konstantfahrt bei nicht aktivem Fahrgeschwindigkeitsbegrenzer (FGB), bei nicht aktivem Höchstgeschwindigkeitsbegrenzer (HGB) und bei nicht aktivem Schaltprogramm zurückgesetzt wird.

## Claims

1. Method for performing open-loop and closed-loop control of an automatic gearbox of a vehicle, in which during a shifting program a predetermined shifting rotational speed is set at which the shifting is carried out, and detection of constant travel is carried out at the vehicle at least during the shifting program, **characterized in that** a vehicle acceleration (a_fzg) and a respectively present mode of the engine of the vehicle are used to detect and to set or reset constant travel, wherein the consideration of the acceleration and the consideration of the mode are carried out in parallel for the setting or resetting of constant travel, and one of the two methods is sufficient to set or reset the constant travel.

2. Method according to Claim 1, **characterized in that** after resetting of constant travel a shifting rotational speed which is determined is set by means of the shifting program, the shifting is carried out and the shifting program is ended.

3. Method according to Claim 1, **characterized in that** the vehicle acceleration (a_fzg) is determined over a predetermined time period.

4. Method according to Claim 3, **characterized in that** the determined values of the vehicle acceleration (a_fzg) are stored in a ring buffer.

5. Method according to one of Claims 3 and 4, **characterized in that** the values which are determined for the vehicle acceleration (a_fzg) are compared with a threshold value.

6. Method according to Claim 5, **characterized in that** constant travel is set at the vehicle if the values which are determined for the vehicle acceleration (a_fzg) are below the predetermined threshold value.

7. Method according to one of the preceding claims, **characterized in that** after the detection of constant travel the velocity (v_fzg) is determined and stored.

8. Method according to Claim 7, **characterized in that** when a change in the velocity (v_fzg) occurs the constant travel is reset by a predetermined threshold value (Delta_v).

9. Method according to Claim 1, **characterized in that** the respective current mode of the engine is determined by means of a communication with the engine control device (EDC).

10. Method according to Claim 1 or 9, **characterized in that** constant travel is set if the velocity (v_fzg) is being decreased externally.

11. Method according to Claim 10, **characterized in that** the velocity (v_fzg) is being decreased externally and constant travel is set if a velocity limiter (FGB) or a maximum speed limiter (HGB) is active.

12. Method according to Claim 1, 9, 10 or 11, **characterized in that** the constant travel is reset when the velocity limiter (FGB) is not active, when the maximum speed limiter (HGB) is not active and when the shifting program is not active.

## Revendications

1. Procédé de commande et/ou de réglage d'une transmission automatique de véhicule, dans laquelle pendant une mesure de programme de changement de vitesse, une vitesse de rotation de changement de vitesse prédéfinie est réglée pour laquelle le changement de vitesse est réalisé, une détection de conduite constante étant réalisée pour le véhicule au moins pendant la mesure de programme de changement de vitesse, **caractérisé en ce que** pour détecter et pour mettre en place une conduite constante ou en sortir, une accélération du véhicule (a_fzg) ainsi qu'un mode respectivement disponible du moteur du véhicule sont utilisés, une observation de l'accélération et une observation du mode utilisé étant réalisées en parallèle pour mettre en place une conduite constante ou en sortir et qu' il suffit un des deux procédés pour mettre en place la conduite constante ou en sortir.

2. Procédé selon la revendication 1, **caractérisé en ce qu'**après une sortie d'une conduite constante, une vitesse de rotation de changement de vitesse déterminée est réglée par le programme de changement de vitesse, le changement de vitesse est réalisé puis que le programme de changement de vitesse prend fin.

3. Procédé selon la revendication 1, **caractérisé en ce que** l'accélération du véhicule (a_fzg) est déterminée sur une période de temps prédéfinie.

4. Procédé selon la revendication 3, **caractérisé en ce que** les valeurs déterminées de l'accélération du véhicule (a_fzg) sont mémorisées dans une mémoire circulaire.

5. Procédé selon l'une quelconque des revendications 3 ou 4, **caractérisé en ce que** les valeurs déterminées de l'accélération du véhicule (a_fzg) sont comparées à une valeur seuil.

6. Procédé selon la revendication 5, **caractérisé en ce qu'**une conduite constante est mise en place pour le véhicule lorsque les valeurs déterminées de l'accélération du véhicule (a_fzg) se situent en dessous de la valeur seuil prédéfinie.

7. Procédé selon l'une quelconque des revendications précédentes, **caractérisé en ce qu'**après la détection d'une conduite constante, la vitesse de conduite (v_fzg) est déterminée et mémorisée.

8. Procédé selon la revendication 7, **caractérisé en ce que** la conduite constante est interrompue en cas de variation de la vitesse de conduite (v_fzg) d'une valeur seuil prédéfinie (Delta_v).

9. Procédé selon la revendication 1, **caractérisé en ce que** le mode respectivement actuel du moteur est déterminé avec l'appareil de commande du moteur (EDC) via une communication.

10. Procédé selon la revendication 1 ou 9, **caractérisé en ce qu'**une conduite constante est mise en place en présence d'une dérégulation externe de la vitesse de conduite (v_fzg).

11. Procédé selon la revendication 10, **caractérisé en ce que** la dérégulation externe de la vitesse de conduite (v_fzg) se produit et qu'une conduite constante est mise en place lorsqu'un limiteur de vitesse de conduite (FGB) ou un limiteur de vitesse maximale (HGB) est actif.

12. Procédé selon la revendication 1, 9, 10 ou 11, **caractérisé en ce que** la conduite constante est retirée lorsqu'aucun limiteur de vitesse de conduite (FGB) n'est actif, lorsqu'aucun limiteur de vitesse maximale (HGB) n'est actif et qu'aucun programme de changement de vitesse n'est actif.
